# EUROPÄISCHE PATENTSCHRIFT

(11) **EP 0 751 913 B1**
(45) Veröffentlichungstag und Bekanntmachung des Hinweises auf die Patenterteilung: **08.04.1998**
(21) Anmeldenummer: 95903241.8
(22) Anmeldetag: 15.12.1994
(51) Int. Cl.: C02F 3/30, C02F 3/10

(54) **VORRICHTUNG UND VERFAHREN ZUR SIMULTANEN BIOLOGISCHEN PHOSPHOR- UND STICKSTOFFELIMINATION AUS ABWASSER**
PROCESS AND DEVICE FOR SIMULTANEOUS BIOLOGICAL ELIMINATION OF PHOSPHORUS AND NITROGEN FROM WASTE WATER
PROCEDE ET DISPOSITIF D'ELIMINATION BIOLOGIQUE SIMULTANEE DU PHOSPHORE ET DE L'AZOTE CONTENUS DANS DES EAUX USEES

(30) Priorität: 19.03.1994 DE 4409435
(43) Veröffentlichungstag der Anmeldung: 08.01.1997
(73) Patentinhaber: Ott, Peter, Dr., 01468 Moritzburg (DE); Koch, Reinhard, D-01609 Gröditz (DE); Peukert, Volkmar, Dr., D-01307 Dresden (DE)
(72) Erfinder: Ott, Peter, Dr., 01468 Moritzburg (DE); Koch, Reinhard, D-01609 Gröditz (DE); Peukert, Volkmar, Dr., D-01307 Dresden (DE)
(74) Vertreter: Hofmann, Klaus
(86) Internationale Anmeldenummer: DE9401504
(87) Internationale Veröffentlichungsnummer: WO9525697

(56) Entgegenhaltungen:
- DE-A- 3 441 664
- DE-A- 4 133 954
- DATABASE WPI Week 8250, Derwent Publications Ltd., London, GB; AN 82-07608J & JP,A,57 150 495 (KUBOTA KK) 17. September 1982

## Beschreibung

Die Erfindung betrifft eine Vorrichtung und ein Verfahren zur simultanen biologischen Phosphor- und Stickstoffelimination aus Abwasser. Mit ihr sollen die gleichzeitige und ganzjährig stabile biologische Phosphor- und Stickstoffelimination vor allem für kleine und mittlere Abwasserbehandlungsanlagen zur Reinigung kommunaler und industrieller Abwässer und solcher der Nahrungs- und Genußmittelproduktion sichergestellt werden.

In der Literatur werden verfahrenstechnische und apparative Lösungen mit und ohne Fixierung der Biomasse sowie Trägermaterialien für Organismen beschrieben.

In DE 36 39 153 werden offenporige, kugelförmige, anorganische, nicht schwimmende Sinterkörper als Trägermaterialien für Mikroorganismen beschrieben. Sie können als Festbett oder Wirbelbett genutzt werden.

In DE 33 01 643 werden eine Vorrichtung und ein Verfahren dargestellt, mit dem Trägermaterial aus der aeroben über die anoxische in die anaerobe Zone befördert wird und gleichzeitig eine äquivalente Menge Trägermaterial entnommen und durch spezielle Einrichtungen in die aerobe Zone zurückbefördert wird.

In DD 300 362 werden ein weiteres Verfahren und ein Reaktor dargestellt, bei dem verwirbelbare Trägermaterialien in Form eines anoxischen Fließbettes und eines belüfteten Wirbelbettes zum Einsatz gelangen.

In DE 42 37 716 wird ein Verfahren beschrieben, mit dem Kohlenstoffverbindungen des Abwassers an oberflächenaktive Adsorptionsmittel, z.B. Aktivkohle, gebunden und für nachfolgende Denitrifikatiosprozesse gespeichert werden.

In DE 38 33 185 wird ein Verfahren zur biologischen Abwasserreinigung beschrieben, bei dem die Nitrifikation durch trägergebundene Mikroorganismen erfolgt und partikuläre Abwasserinhaltsstoffe abgetrennt und einer der Nitrifikationsstufe nachgeschalteten Denitrifikationsstufe als Kohlenstoffquelle zugeführt werden.

Die in der Literatur beschriebenen Verfahren und Einrichtungen zur simultanen biologischen Phosphor- und Stickstoffelimination mit oder ohne Trägerbiologie weisen trotz hohen technologischen und steuertechnischen Aufwandes und großer Reaktorvolumina nur unzureichende Prozeßstabilität und Eliminationsleistungen auf. Die ganzjährige Einhaltung der gültigen Mindestanforderungen für die Einleitung von Phosphor und Stickstoff in Gewässer werden mit den bekannten Verfahren und Anlagen auf biologischem Wege nicht gewährleistet.

Eine Ursache der unzureichenden biologischen Eliminationsraten und der Instabilität bekannter Verfahren und Anlagen wird darin gesehen, daß die hochspezialisierten Mikroorganismen zyklisch wiederkehrend durch alle Verfahrensstufen mit für sie teilweise lebensfeindlichen Milieubedingungen geführt werden. Dadurch treten Effektivitätsverluste bei den Stoffwechselleistungen der Mikroorganismen auf, die auch durch einen erhöhten Betriebs- und Steueraufwand nicht kompensiert werden können.

Die auftretenden Störungen und Instabilitäten im Betrieb dieser Anlagen haben häufig ihre Ursache auch im unzureichenden Angebot biologisch nutzbarer Kohlenstoffverbindungen, vor allem während der belastungsschwachen Nacht- und Wochenendperioden.

Die in DE 41 33 954 A1 beschriebene Erfindung beinhaltet ebenfalls eine Anlage und ein Verfahren zur biologischen P- und N-Eliminierung aus Abwasser unter Nutzung von trägerfixierten Mikroorganismen.

Weiterer Stand der Technik ergibt sich aus DATABASE WPI, AN 82-07608J & JP-A-57 150 495, September 1982.

Partikuläre organische Abwasserinhaltsstoffe können bei diesen Verfahren nur begrenzt als Kohlenstoffquellen von Denitrifikanten und Phosphor speichernden Mikroorganismen genutzt werden. Sie gelangen entweder in die aeroben Bereiche und verursachen dort einen erhöhten Sauerstoffbedarf bei ihrem Abbau oder führen bei Schwimm- und Festbettreaktoren zur Anreicherung stoffwechselhemmender Abbauprodukte und zur Fermentation von Methan, wodurch die für die Phosphorelimination wichtigen niedermolekularen organischen Säuren abgebaut werden. Durch Anreicherung gasförmiger Abbauprodukte treten hydraulische Störungen und Kurzschlußströmungen auf.

Der Erfindung liegt die Aufgabe zugrunde, eine Vorrichtung und ein Verfahren zu entwickeln, mit deren Hilfe bei der Abwasserbehandlung höhere biologische Eliminationsraten für Phosphor- und Stickstoffverbindungen auch bei niedrigen Temperaturen sowie kleinere Reaktorvolumina durch kürzere Verweilzeiten und höhere Stoffumsetzungen pro zeit- und Raumeinheit erreicht werden können. Die hochspezialisierten Mikroorganismen sollen in den einzelnen Verfahrensstufen jeweils optimalen Milieubedingungen unterliegen.

Die Aufgabe wird erfindungsgemäß durch den Vorrichtungsanspruch 1 und den Verfahrensanspruch 5 gelöst. Weitere Ausgestaltungen sind in den Ansprüchen 2 bis 4 und 6 bis 7 beschrieben.

Mindestens 80 % des zufließenden Abwassers und biologisch aktiver Rücklaufschlamm in einer Menge von 60 - 400 % der Abwassermenge werden in einer Hydrolyse- und Versäuerungsstufe, in der sich verwirbelbare, schwimmende Trägermaterialien für Mikroorganismen befinden, in Kontakt gebracht. Diese Verfahrensstufe, die 10 - 25 % des Gesamtvolumens der beiden Verfahrensstufen einnimmt und schwimmendes Trägermaterial für Mikroorganismen enthält, besteht aus einer anoxischen und einer anaeroben Milieuzone. Die Aufwuchsträger werden mit der immobilisierten Biomasse in den jeweiligen Stufen zurückgehalten.

In der Hydrolyse- und Versäuerungsstufe erfolgt durch Filterwirkung und adsorptive Anlagerung an die Schleimschicht der Aufwuchsträger eine teilweise Rückhaltung partikulärer und hochmolekularer Abwasserinhaltsstoffe. Die auf den Aufwuchsträgern immobilisierten Mikroorganismen sind auf die Denitrifikation von Nitrat und die hydrolytische Spaltung und Vergärung der höhermolekularen organischen Stoffe in biologisch nutzbare niedermolekulare Kohlenstoffverbindungen spezialisiert. Die trägergebundenen Organismen weisen ein hohes Schlammalter auf.

Die biologischen Prozesse der Hydrolyse- und Versäuerungsstufe sind von den Stoffwechselprozessen des Belebtschlammes weitgehend abgekoppelt. Die Organismen des Belebtschlammes nehmen bei der kurzzeitigen Passage dieser Stufe die von den trägerfixierten Organismen gebildeten niedermolekularen Stoffwechselprodukte als organische Nährsubstrate auf und speichern diese in der Zelle.

Bei Hydrolyse-, Gärungs- und Denitrifikationsprozessen entstehen Stoffwechselprodukte, wie z.B. Stickstoff, Wasserstoff, Schwefelwasserstoff, Kohlendioxid und Methan, die sich bei Anreicherung nachteilig auf bestimmte Stoffwechselprozesse und auf die Hydraulik in dieser Stufe auswirken. Um die Bildung und Anreicherung dieser Stoffe zu behindern, wird der Stufe in Abständen von maximal 6 Stunden maximal bis 15 min Luft zugeführt.

Das Abwasser-Belebtschlamm-Gemisch gelangt anschließend nach einer maximalen Verweilzeit von 1,5 Stunden und nach Abtrennung der Aufwuchsträger in eine maximal zu 80 Vol.% mit Aufwuchsträgern gefüllte Nitrifikations- und Denitrifikationsstufe. Diese Stufe ist in ein belüftetes, nitrifizierendes Wirbelbett, in ein unbelüftetes, denitrifizierendes Schwebebett und in ein wahlweise betreibbares Wirbel-/Schwebebett unterteilt. Die trägerfixierten und die im Belebtschlamm enthaltenen Mikroorganismen werden mit dem Abwasser nacheinander durch diese Zonen geführt.

Durch gesteuerten Lufteintrag kann die Stufe auch intermittierend als Wirbelbett oder Schwebebett betrieben werden.

Nach Passage dieser Stufe wird nach vorheriger Abtrennung der Aufwuchsträger das gereinigte Abwasser in bekannter Weise in einer Nachkläreinrichtung vom Belebtschlamm getrennt. Ein Teil des Schlammes wird kontinuierlich in die Hydrolyse- und Versäuerungsstufe zurückgeführt.

### Ausführungsbeispiel 1

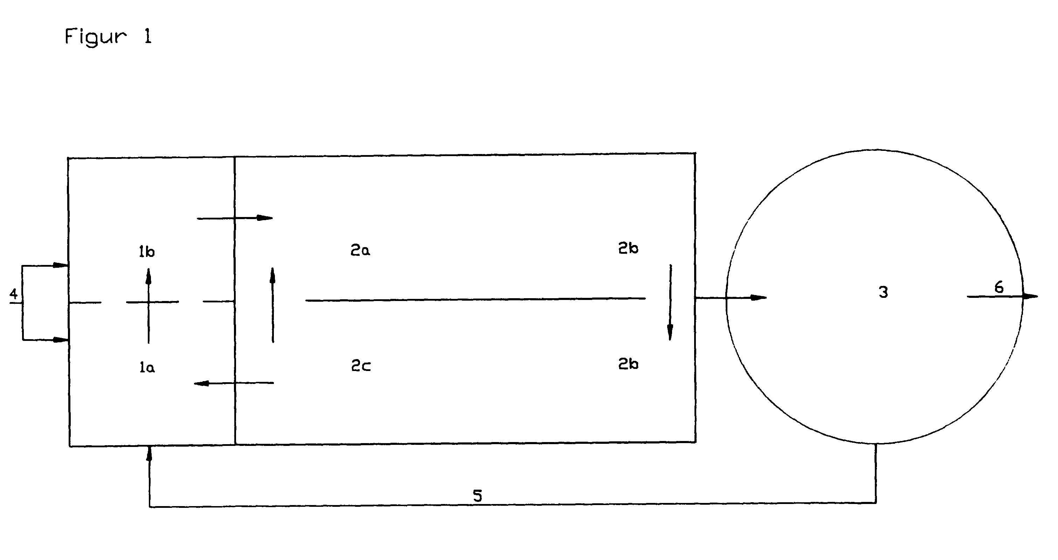

Die Erfindung wird in Fig. 1 am Beispiel einer kommunalen Kläranlage mit einem Anschlußwert von ca. 25.000 Einwohnern dargestellt.

100 % Rücklaufschlamm 5 aus der Nachkläreinrichtung 3 und 250 % Rezirkulat (bezogen auf die Zulaufmenge) aus der Nitrifikations- und Denitrifikationsstufe 2 sowie 50 % frisches, Phosphor und Stickstoff sowie partikuläre und gelöste organische Stoffe enthaltendes kommunales Abwasser werden der anoxischen Zone 1a der Hydrolyse- und Versäuerungsstufe 1 zugeführt und dort ca. 40 - 60 Minuten in Kontakt gebracht. Dabei wird das Gemisch vollständig von gelöstem und teilweise von an Nitrat gebundenem Sauerstoff befreit. Partikuläre Abwasserinhaltsstoffe werden teilweise durch Filtrationswirkung und durch adsorptive Anlagerung an Biomasse und Aufwuchsträger zurückgehalten.

Die anoxische Zone la der Hydrolyse- und Versäuerungsstufe 1 ist mindestens zu 30 cm mit schwimmenden, granulierten Trägermaterialien für Mikroorganismen gefüllt. Die hohlzylinderförmigen, im Querschnitt sternförmigen Körper, mit einem spezifischen Gewicht von etwa 0.90 g/cm³, einer Länge von 6 mm, einem Innendurchmesser von 3.5 mm und einer besiedelbaren Oberfläche von etwa 1000 m²/m³ Schüttvolumen, bilden in dieser Zone ein biologisch aktives Schwimmbettfilter aus, das vor allem von anoxisch lebenden, denitrifizierenden und teilweise hydrolytisch wirkenden Mikroorganismen in hoher Dichte besiedelt wird.

Die Träger verbleiben mit der sessilen Biomasse in der anoxischen Zone la der Hydrolyse- und Versäuerungsstufe 1.

Die Aufwuchsträger des Schwimmbettfilters und die suspendierte Biomasse werden durch eine Umwälzeinrichtung umgeschichtet bzw. in Schwebe gehalten. Dabei wird die Anreicherung gasförmiger Abbauprodukte, wie z.B. Stickstoff, verhindert.

Der Volumenanteil der anoxischen Zone la am Gesamtvolumen der Stufen 1 und 2 beträgt ca. 12 Vol. %.

Danach gelangen das Abwasser-Belebtschlamm-Gemisch sowie weitere 50 % ungereinigten Abwassers in die anaerobe Zone 1b der Hydrolyse- und Versäuerungsstufe 1. Diese Zone ist ebenfalls mit Trägermaterialien für Mikroorganismen (50 Vol.%), wie beschrieben, gefüllt. Die Aufwuchsträger bilden in dieser Zone ein anaerob-biologisches Schwebebett aus, das vor allem von hydrolytisch wirkenden und Säure bildenden Mikroorganismen in hoher Dichte besiedelt wird. Die trägergebundenen Organismen verbleiben mit den Aufwuchskörpern in der anaeroben Zone 1b der Hydrolyse- und Versäuerungsstufe 1.

Die Geschwindigkeit der Stoffumsetzungen pro Zeit- und Raumeinheit ist in diesem Teil der Stufe aufgrund hoher spezifischer Biomassekonzentrationen und weitgehender Übereinstimmung zwischen den Milieuansprüchen der anaeroben Mikroorganismen und den Milieubedingungen sowie durch die Zuführung eines Teilstromes frischen Abwassers über einen Zulauf 4 sehr hoch.

In der anaeroben Zone 1b der Hydrolyse- und Versäuerungsstufe 1 laufen folgende biologische, biochemische und physikalische Prozesse ab:

In den hydraulisch beruhigten Hohlräumen der Aufwuchsträger und des Schwebebettes werden partikuläre Abwasserinhaltsstoffe durch adsorptive Anlagerung an vorhandene Biomasse und Schleimschichten zurückgehalten. Ein Teil der organischen Partikel sowie gelöste höhermolekulare organische Stoffe des zulaufenden Abwasser-Belebtschlamm-Gemisches werden durch Exoenzyme der trägergebundenen Biomasse hydrolytisch in niedermolekulare Verbindungen aufgespalten. Ein Teil der Hydrolyseprodukte wird durch weitere anaerob-biologische Prozesse zu organischen Säuren und Alkoholen vergoren.

Auf diese Weise werden aus biologisch schwer abbaubaren organischen Stoffen in kurzer Zeit biologisch leichter nutzbare Kohlenstoffverbindungen gewonnen.

Durch die Synthese niedermolekularer organischer Stoffe werden die in dieser Stufe ablaufenden, Kohlenstoffe benötigenden biologischen Prozesse, wie z.B. die Speicherung organischer Stoffe durch Phosphor eliminierende Mikroorganismen, begünstigt. Die Kohlenstoffquelle steht den Mikroorganismen unabhängig von der Zulaufbelastung, also auch während der belastungsschwachen Nachtstunden und am Wochenende, gleichmäßig zur Verfügung.

Die Geschwindigkeit der Stoffumsetzungen pro Zeit- und Raumeinheit ist aufgrund hoher Konzentrationen spezifischer Biomasse und weitgehender Übereinstimmung zwischen den Milieuansprüchen der anaerob-anoxischen Mikroorganismen und den Milieubedingungen in dieser Zone im Vergleich mit biochemisch äquivalenten Stufen bekannter Verfahren wesentlich größer. Die Bioaktivität des die Stufe passierenden Belebtschlammes hat für die anaerob-anoxischen Stoffwechselprozesse in der Hydrolyse- und Versäuerungsstufe 1 aufgrund der relativ kurzen Kontaktzeit nur eine untergeordnete Bedeutung.

Die im Belebtschlamm angesiedelten Phosphor speichernden Mikroorganismen nehmen die niedermolekularen organischen Stoffe bei der Passage der anaeroben Zone 1b der Hydrolyse- und Versäuerungsstufe 1 auf und speichern sie in der Zelle. Der Eliminationsprozeß ist aufgrund relativ hoher Stoffkonzentrationen in kurzer Zeit abgeschlossen. Die Verweilzeit des Abwasser-Belebtschlamm-Gemisches in dieser Stufe beträgt unter Berücksichtigung des Verdrängungsvolumens der Aufwuchsträger im Mittel nur 25 - 35 Minuten.

Bei anaeroben Hydrolyse- und Gärungsprozessen entstehen in erhöhtem Maße Wasserstoffionen, die zu einer Hemmung der Essigsäure-Gärung führen können. Um zu verhindern, daß durch Stoffwechselstörungen erneut biologisch weniger gut nutzbare Kohlenstoffverbindungen, wie z.B. Buttersäure oder Propionsäure, entstehen, wird der Stufe in Zeitabständen von etwa 2 - 3 Stunden für 1 - 2 Minuten Luft zugeführt. Dabei wird ein Teil des Wasserstoffes als Wasser gebunden.

Durch den diskontinuierlichen Lufteintrag erfolgt gleichzeitig eine Umschichtung des Schwimmbettfilters. Der damit verbundene Austrag gasförmiger und zum Teil toxischer Abbauprodukte, wie Stickstoff, Schwefelwasserstoff oder Kohlendioxid, bewirkt eine Stimulierung der biologischen Prozesse und gewährleistet eine gleichmäßige Durchströmung des Schwimmbettes. Durch diskontinuierlichen Eintrag von Sauerstoff wird auch die Aktivität von Methanbakterien gehemmt.

Der Volumenanteil dieser Zone 1b am Gesamtvolumen der beiden Behandlungsstufen 1 und 2 beträgt ca. 12 - 15 Vol. %.

Das Abwasser-Belebtschlamm-Gemisch gelangt nach Passage der anaeroben Zone 1b der Hydrolyse- und Versäuerungsstufe 1 in die Nitrifikations- und Denitrifikationsstufe 2. Diese Stufe ist in eine unbelüftete, denitrifizierende Schwebebettzone 2a, in eine belüftete, nitrifizierende Wirbelbettzone 2c, und in eine wahlweise betreibbare Wirbelbett-/Schwebebettzone 2b aufgeteilt. Die Stufe 2 enthält 10 Vol.% Aufwuchsträger. Form und Eigenschaften entsprechen den in der Hydrolyse- und Versäuerungsstufe 1 eingesetzten Trägern.

Aufwuchsträger, Belebtschlamm und Abwasser werden mit Hilfe eines Strömungsbeschleunigers ständig durch die einzelnen Zonen der Nitrifikations- und Denitrifikationsstufe 2 geführt.

In der Nitrifikations- und Denitrifikationsstufe 2 werden die äußeren Besiedlungsflächen der Aufwuchsträger vor allem von nitrifizierenden sowie BSB/CSB-abbauenden, aber auch von Phosphor eliminierenden Mikroorganismen bewachsen. Durch hohe Scherkräfte bildet sich auf der Oberfläche ein dünner, dadurch biochemisch sehr aktiver Film aus Mikroorganismen aus. Im Innern der hohlzylinderförmigen Träger wächst aufgrund reduzierter Scherkräfte ein stärkerer biologischer Rasen an.

Durch den gehemmten Stoffaustausch kommt es im Innern des Hohlkörpers vor allem in den unteren Schichten des biologischen Rasens zu einem Abfall der Sauerstoffkonzentrationen auf Werte unter 0,5 mg/l. Der Sauerstoffmangel begünstigt die Besiedelung und die Stoffwechselprozesse denitrifizierender Mikroorganismen. Durch das gleichzeitige Anwachsen aerob sowie anoxisch wirkender Mikroorganismen auf den Aufwuchsträgern kommt es in der belüfteten Zone 2c neben Nitrifikations- auch zu Denitrifikationsprozessen.

Durch die besonderen biochemischen Verhältnisse in den Hohlräumen der Aufwuchsträger und durch intermittierenden Lufteintrag sind in dieser Stufe Bedingungen gegeben, die eine Besiedlung der Aufwuchsträger auch durch Phosphor speichernde Mikroorganismen möglich machen.

Die Prozesse der biologischen Stickstoff- und Phosphorelimination werden dadurch verstärkt, daß das Abwasser-Belebtschlamm-Gemisch und die Aufwuchsträger ständig durch die verschiedenen Zonen der Stufe mit unterschiedlichen Milieubedingungen geführt werden.

Die relativen Volumenanteile der belüfteten bzw. unbelüfteten Zone am Gesamtvolumen der Stufe können durch wahlweisen Betrieb der Wirbelbett-/Schwebebettzone gesteuert werden. So wird z.B. während der Belastungsspitzen und während der kalten Jahreszeit der belüftete Anteil zur Stimulierung der Nitrifikationsprozesse erhöht und umgekehrt während der belastungsschwachen Nachtstunden zur Förderung der Denitrifikationsvorgänge reduziert.

In den Zonen der Nitrifikations- und Denitrifikationsstufe 2 erfolgen durch suspendierte und trägerfixierte Mikroorganismen die Nitrifizierung von Ammonium-Stickstoff, die teilweise Denitrifikation von Nitrat-Stickstoff in molekularen Stickstoff, die biologische Elimination von Phosphor durch zelluläre Speicherung und der Abbau organischer Stoffe (BSB, CSB).

Das auf diese Weise behandelte Abwasser-Belebtschlamm-Gemisch gelangt anschließend in die Nachkläreinrichtung 3. Hier erfolgt die Abtrennung des Belebtschlammes und biologisch nicht abgebauter partikulärer Stoffe vom gereinigten Abwasser. Mindestens 60 und maximal 400 Vol.% des abgetrennten Schlammes werden ständig in die Hydrolyse- und Versäuerungsstufe 1 zurückgeführt. Das gereinigte Abwasser wird über den Ablauf 6 entnommen.

Durch die Erfindung können die Konzentrationen kommunalen Abwassers mittlerer Beschaffenheit auf folgende Werte reduziert werden:

| | mg/l | % Abbau |
|---|---|---|
| BSB₅ | < 10 | 98 |
| CSB | < 60 | 95 |
| P gesamt | < 1.5 | 95 |
| Ortho-P | < 1.0 | 95 |
| N-NH₄ | < 10 | 95 |
| Summe anorganisch. N | < 15 | 80 |

### Ausführungsbeispiel 2

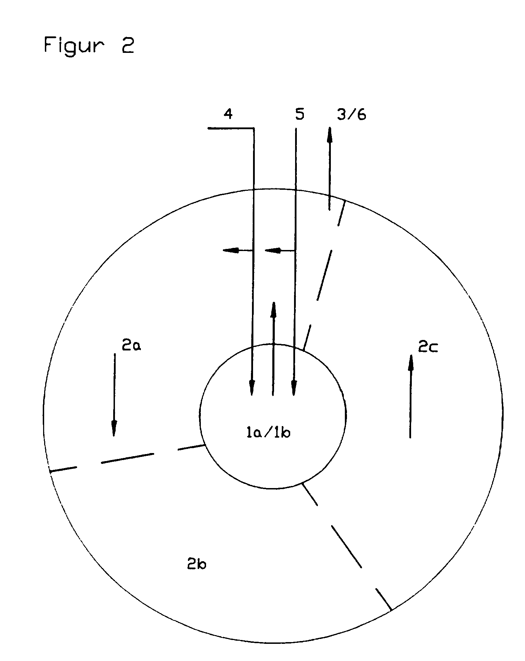

Die Erfindung wird nachfolgend in Fig. 2 am Beispiel einer Kompaktkläranlage für ein Gewerbegebiet mit einem Anschlußwert von ca. 4.000 Einwohnergleichwerten beschrieben.

Abwasser 4 und Rücklaufschlamm 5 werden von oben der vertikal angeordneten Hydrolyse- und Versäuerungsstufe 1 zugeführt. Diese Stufe ist vollständig mit den in Beispiel 1 näher beschriebenen Aufwuchsträgern gefüllt. Die Träger bilden in der gesamten Stufe ein Schwimmbettfilter aus. Sie verbleiben mit der sessilen Biomasse in der Hydrolyse- und Versäuerungsstufe 1.

Im oberen Teil der Stufe bildet sich eine anoxische Denitrifikationszone la und darunter eine Zone mit anaeroben Milieuverhältnissen 1b aus. Die Stufe 1 nimmt etwa 20 Vol.% der Behandlungsstufen 1 und 2 ein.

In den hydraulisch beruhigten Hohlräumen der Aufwuchsträger und des Schwimmbettfilters werden partikuläre Abwasserinhaltsstoffe durch adsorptive Anlagerung an vorhandene Biomasse und Schleimschichten zurückgehalten. Ein Teil der organischen Partikel sowie gelöste höhermolekulare organische Stoffe des zulaufenden Abwasser-Belebtschlamm-Gemisches werden durch Exoenzyme der trägergebundenen Biomasse hydrolytisch in niedermolekulare Verbindungen aufgespalten. Ein Teil der Hydrolyseprodukte wird durch weitere anaerobbiologische Prozesse zu organischen Säuren und Alkoholen vergoren.

Auf diese Weise werden aus biologisch schwer abbaubaren organischen Stoffen in kurzer Zeit biologisch leichter nutzbare Kohlenstoffverbindungen gewonnen.

Die Geschwindigkeit der Stoffumsetzungen pro Zeit- und Raumeinheit ist in diesem Teil der Stufe aufgrund hoher spezifischer Biomassekonzentrationen und weitgehender Übereinstimmung zwischen den Milieuansprüchen der anaeroben Mikroorganismen und den Milieubedingungen sowie durch die Zuführung eines Teilstromes frischen Abwassers über den Zulauf 4 sehr hoch.

Die biologischen Prozesse der Hydrolyse- und Versäuerungsstufe 1 sind von den Stoffwechselprozessen des Belebtschlammes weitgehend abgekoppelt. Bestimmte Organismen des Belebtschlammes, wie z.B. Phosphor speichernde Mikroorganismen, nehmen bei der kurzzeitigen Passage dieser Stufe die von den trägerfixierten Organismen gebildeten niedermolekularen Stoffwechselprodukte als organische Nährsubstrate auf und speichern diese in der Zelle.

Bei Hydrolyse-, Gärungs- und Denitrifikationsprozessen entstehen Stoffwechselprodukte, wie z.B. Stickstoff, Wasserstoff, Schwefelwasserstoff, Kohlendioxid und Methan, die sich bei Anreicherung nachteilig auf bestimmte Stoffwechselprozesse und auf die Hydraulik in dieser Stufe auswirken. Um die Bildung und Anreicherung dieser Stoffe zu behindern und eine partielle Umschichtung des Schwimmbettes zu erreichen, wird der Stufe in Zeitabständen von 4 Stunden für ca. 2 Minuten Luft von unten zugeführt.

Das Abwasser-Belebtschlamm-Gemisch gelangt nach vertikaler Passage der Hydrolyse- und Versäuerungsstufe 1 von unten in die maximal zu 80 Vol.% mit Aufwuchsträgern gefüllte Nitrifikations- und Denitrifikationsstufe 2. Die ringförmig um die Hydrolyse- und Versäuerungsstufe 1 angeordnete Stufe 2 ist in eine unbelüftete, denitrifizierende Schwebebettzone 2a, in eine belüftete, nitrifizierende Wirbelbettzone 2c, und in eine wahlweise betreibbare Wirbel- oder Schwebebettzone 2b unterteilt. Die trägerfixierten und die im Belebtschlamm enthaltenen Mikroorganismen werden mit dem Abwasser nacheinander durch diese Zonen geführt. Dabei erfolgt der Abbau organischer Stoffe und Phosphor sowie die Elimination von Stickstoff durch Nitrifikation und Denitrifikation.

Nach wiederholter Passage dieser Zonen wird nach vorheriger Abtrennung der Aufwuchsträger das gereinigte Abwasser in bekannter Weise in der Nachkläreinrichtung 3 vom Belebtschlamm getrennt. Mindestens 60 Vol.% des Schlammes werden kontinuierlich in die Hydrolyse- und Versäuerungsstufe zurückgeführt.

Durch die Erfindung können die Konzentrationen kommunalen Abwassers mittlerer Beschaffenheit auf ähnliche Werte, wie im Beispiel 1 beschrieben, reduziert werden:

### Ausführungsbeispiel 3

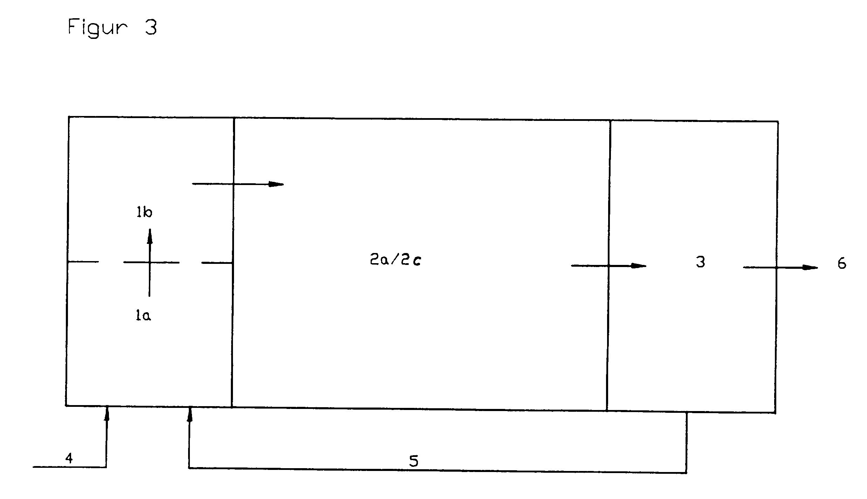

Die Erfindung wird in Fig. 3 am Beispiel einer Container-Kläranlage zur Reinigung kommunalen Abwassers mit einem Anschlußwert von ca. 400 Einwohnern beschrieben.

Rücklaufschlamm 5 (ca. 400 % der zulaufenden Abwassermenge) und frisches nur von Grobstoffen befreites, jedoch Phosphor und Stickstoff sowie partikuläre und gelöste organische Stoffe enthaltendes kommunales Abwasser werden der anoxischen Zone 1a der Hydrolyse- und Versäuerungsstufe 1 von unten zugeführt und dort ca. 30 - 40 Minuten in Kontakt gebracht. Dabei wird das Gemisch vollständig von gelöstem und teilweise von an Nitrat gebundenem Sauerstoff befreit. Durch "Nitratatmung" werden dabei ca. 30 % der gelösten, meist niedermolekularen organischen Stoffe biologisch abgebaut.

Danach fließt das Abwasser-Belebtschlamm-Gemisch von oben der anaeroben Zone 1b der Hydrolyse- und Versäuerungsstufe 1 zu. Diese Zone ist 100 % mit Trägermaterialien für Mikroorganismen, wie in Beispiel 1 beschrieben, gefüllt. Sie bilden in der Versäuerungsstufe ein biologisch aktives Schwebebett mit Filterwirkung aus. Das Schwebebett wird vor allem von anaerob-hydrolytisch wirkenden und Säure bildenden sowie denitrifizierenden Mikroorganismen in hoher Dichte besiedelt.

In der Zone laufen biologische, biochemische und physikalische Prozesse, wie in Beispiel 1 beschrieben, ab.

Um die Bildung und Anreicherung stoffwechselhemmender oder toxisch wirkender Stoffwechselprodukte zu unterbinden, wird dieser Zone in Abständen von 3 Stunden Luft von unten zugeführt. Durch die Entgasung und Umschichtung des Schwebebettes verbessern sich die biologischen und hydraulischen Bedingungen in dieser Zone.

Das Abwasser-Belebtschlamm-Gemisch gelangt nach Passage der anaeroben Zone 1b der Hydrolyse- und Versäuerungsstufe 1 in die Nitrifikations- und Denitrifikationsstufe 2, die wahlweise als belüftetes Wirbelbett oder als unbelüftetes Schwebebett betrieben werden kann. Diese Stufe ist teilweise (15 Vol.%) mit Aufwuchsträgern, wie in Beispiel 1 beschrieben, gefüllt. Form und Eigenschaften entsprechen den in der Hydrolyse- und Versäuerungsstufe 1 eingesetzten Trägern.

Durch die biochemischen Verhältnisse in den Hohlräumen der Aufwuchsträger und des Schwebe- bzw. Wirbelbettes sowie durch intermittierenden Lufteintrag sind Milieubedingungen gegeben, die auch eine Besiedlung der Aufwuchsträger durch Phosphor speichernde Mikroorganismen ermöglichen.

Der Hauptanteil der Phosphor speichernden Mikroorganismen siedelt sich jedoch in der suspendierten Biomasse an. Diese Organismen nehmen in der belüfteten Stufe in erhöhtem Maße Phosphat auf, das in der Zelle als Polyphosphat gespeichert wird. Auf diese Weise wird der im Abwasser enthaltene Phosphor über 90 % reduziert und gleichzeitig die Phosphorkonzentrationen in der suspendierten Biomasse von durchschnittlich 1 % auf 5 - 6 % erhöht.

Das Abwasser-Belebtschlamm-Gemisch gelangt nach Passage der belüfteten Stufe in eine Nachkläreinrichtung 3. Hier erfolgt die Abtrennung von Belebtschlamm und biologisch nicht abgebauter partikulärer Stoffe vom gereinigten Abwasser. Ein Teil des abgetrennten Schlammes wird erneut in die anoxische Zone la der Hydrolyse- und Versäuerungsstufe 1 zurückgeführt.

Durch das erfindungsgemäß beschriebene Verfahren können auch in kleinen Kläranlagen die Abwasserinhaltsstoffe kommunalen Abwassers mittlerer Beschaffenheit, wie in Beispiel 1 beschrieben, weitergehend eliminiert werden.

### Bezugszeichenliste

- 1: Hydrolyse- und Versäuerungsstufe
- 1a: anoxische Zone
- 1b: anaerobe Zone
- 2: Nitrifikations- und Denitrifikationsstufe
- 2a: Denitrifikationszone, anoxisches Schwebebett
- 2b: Steuerzone, wahlweise Wirbelbett/Schwebebett
- 2c: Nitrifikationszone, aerobes Wirbelbett
- 3: Nachkläreinrichtung
- 4: Zulauf
- 5: Rücklaufschlamm
- 6: Ablauf

## Patentansprüche

1. Vorrichtung zur simultanen biologischen Phosphor- und Stickstoffelimination aus Abwasser in schwimmfähiges Trägermaterial enthaltenden aeroben, anoxischen und anaeroben Zonen mit nachgeschalteter Nachkläreinrichtung und Rücklauf schlammleitung, wobei der Nitrifikationsstufe (2) mit integrierter simultaner Denitrifikation, die maximal 80 Vol% Trägermaterial für Mikroorganismen enthält, eine Hydrolyse- und Versäuerungsstufe (1) vorgeschaltet ist, die als Schwimmbettfilter ausgebildet ist und die in eine anoxische Denitrifikationszone (la) und eine anaerobe Phosphatfreisetzungszone (1b) unterteilt ist und eine Leitung für Rücklaufschlamm (5) die Nachklärung (3) mit der Hydrolyse- und Versäuerungsstufe (1) verbindet,
dadurch gekennzeichnet, daß die anaerobe Phosphatfreisetzungszone (1b) eine Belüftungseinrichtung enthält.

2. Vorrichtung nach Anspruch 1, dadurch gekennzeichnet, daß die Hydrolyse- und Versäuerungsstufe (1) 10 - 25% des Gesamtvolumens der Behandlungsstufen (1) und (2) einnimmt.

3. Vorrichtung nach Anspruch 1 und 2, dadurch gekennzeichnet, daß eine belüftete Wirbelbettzone (2c) der Nitrifikations- und Denitrifikationsstufe (2) mit der anoxischen Zone (1a) der Hydrolyse- und Versäuerungsstufe (1) verbunden ist.

4. Vorrichtung nach den Ansprüchen 1 bis 3, dadurch gekennzeichnet, daß die Hydrolyse- und Versäuerungsstufe (1) eine Rühreinrichtung enthält.

5. Verfahren zur simultanen biologischen Phosphor- und Stickstoffelimination aus Abwasser unter Nutzung aerober anoxischer und anaerober Verfahrensstufen und Einsatz suspendierter und trägerfixierter Mikroorganismen, wobei das zu behandelnde Abwasser und die suspendierte Biomasse über die Hydrolyse- und Versäuerungsstufe (1), die Nitrifikationsstufe (2) mit integrierter simultaner Denitrifikation und eine Nachkläreinrichtung (3) im Kreislauf geführt wird, dadurch gekennzeichnet,
daß die Aufenthaltszeit in der anoxischen und der anaeroben Zone (1a und 1b) maximal 1,5 Stunden beträgt, die Aufwuchsträger in ihren jeweiligen Stufen zurückgehalten werden und die anaerobe Phosphatfreisetzungszone (1b) intervallmäßig kurzzeitig belüftet wird.

6. Verfahren nach Anspruch 5, dadurch gekennzeichnet, daß der intervallmäßige, kurzzeitige Lufteintrag in die Hydrolyse- und Versäuerungsstufe (1) maximal aller 6 Stunden für eine Dauer von maximal 15 Minuten erfolgt.

7. Verfahren nach den Ansprüchen 5 und 6, dadurch gekennzeichnet, daß das Abwasser zu mindestens 80 % und biologisch aktiver Rücklaufschlamm 5 in einer Menge von 60 - 400 % der Abwassermenge, in die anoxische Zone (1a) der Hydrolyse- und Versäuerungsstufe (1) und der restliche Anteil in die Nitrifikations- und Denitrifikationsstufe (2) eingeleitet werden.

## Claims

1. A device for simultaneous biological elimination of phosphorus and nitrogen from wastewater in aerobic, anoxic and anaerobic zones containing buoyant carrier material with a downstream secondary clarification facility and a return sludge line, whereby upstream from the nitrification stage (2) with integrated simultaneous denitrification, containing a maximum of 80 vol% carrier material for microorganisms, is connected a hydrolysis and acidification stage (1) designed as a floating bed filter and subdivided into an anoxic denitrification zone (la) and an anaerobic phosphate release zone (1b), and a line for return sludge (5) connects the secondary clarification (3) to the hydrolysis and acidification stage (1), characterized in that the anaerobic phosphate release zone (1b) contains an aeration device.

2. A device according to Claim 1, characterized in that the hydrolysis and acidification stage (1) takes up 10-25% of the total volume of treatment stages (1) and (2).

3. A device according to Claims 1 and 2, characterized in that an aerated fluidized bed zone (2c) of the nitrification and denitrification stage (2) is connected to the anoxic zone (1a) of the hydrolysis and acidification stage (1).

4. A device according to Claims 1 to 3, characterized in that the hydrolysis and acidification stage (1) contains a stirring device.

5. A process for simultaneous biological elimination of phosphorus and nitrogen from wastewater using aerobic, anoxic and anaerobic process stages and using suspended microorganisms fixed on a carrier, where the wastewater to be treated and the suspended biomass are circulated over the hydrolysis and acidification stage (1), the nitrification stage (2) with integrated simultaneous denitrification and a secondary clarification facility (3), characterized in that the retention time in the anoxic and anaerobic zones (1a and 1b) amounts to a maximum of 1.5 hours, the saprobe carriers are retained in their respective stages and the anaerobic phosphate release zone (1b) is aerated briefly in intervals.

6. A process according to Claim 5, characterized in that the brief introduction of air into the hydrolysis and acidification stage (1) in intervals occurs a maximum of every six hours for a maximum duration of 15 minutes.

7. A process according to Claims 5 and 6, characterized in that the wastewater in the amount of at least 80% and biologically active return sludge (5) in the amount of 60-400% of the amount of wastewater are introduced into the anoxic zone (1a) of the hydrolysis and acidification stage (1), and the remainder is introduced into the nitrification and denitrification stage (2).

## Revendications

1. Equipement pour l'élimination biologique simultanée du phosphore et de l'azote dans les eaux usées, dans des zones aérobies, anoxiques et anaérobies contenant un matériau support flottant, avec dispositif de décantation finale et conduite de boue de recyclage en aval, équipement dans lequel on prévoit en amont du stade de nitrification (2) avec dénitrification simultanée intégrée contenant 80% vol., au maximum, de matériau support pour des micro-organismes, un stade d'hydrolyse et d'acidification (1) réalisé sous forme de filtre à lit flottant et subdivisé en une zone de dénitrification anoxique (1a) et en une zone anaérobie de libération de phosphate (1b), et dans lequel une conduite pour la boue de recyclage (5) relie la décantation finale (3) au stade d'hydrolyse et d'acidification (1), caractérisé en ce que la zone anaérobie de libération de phosphate (1b) comporte un aérateur.

2. Equipement selon la revendication 1, caractérisé en ce que le stade d'hydrolyse et d'acidification (1) occupe 10 - 25% du volume total des stades de traitement (1) et (2).

3. Equipement selon les revendications 1 et 2, caractérisé en ce qu'une zone à lit fluidisé aérée (2c) du stade de nitrification et dénitrification (2) est reliée à la zone anoxique (la) du stade d'hydrolyse et d'acidification (1).

4. Equipement selon les revendications 1 à 3, caractérisé en ce que le stade d'hydrolyse et d'acidification (1) comprend un dispositif d'agitation.

5. Procédé pour l'élimination biologique simultanée du phosphore et de l'azote dans les eaux usées, avec exploitation de stades aérobies, anoxiques et anaérobies et mise en oeuvre de micro-organismes mis en suspension et fixés sur support, selon lequel les eaux usées à traiter et la biomasse en suspension sont amenées à circuler par le stade d'hydrolyse et d'acidification (1), le stade de nitrification (2) avec dénitrification simultanée intégrée, et; un dispositif de décantation finale (3), caractérisé en ce que le temps de séjour dans les zones anoxique et anaérobie (1a et 1b) est de 1,5 heure, au maximum, en ce que les supports d'accroissement sont maintenus à leurs stades respectifs, et en ce que la zone anaérobie de libération de phosphate (1b) est aérée périodiquement pendant peu de temps.

6. Procédé selon la revendication 5, caractérisé en ce que l'apport d'air périodique et de courte durée au stade d'hydrolyse et d'acidification (1) a lieu toutes les 6 heures, au maximum, pour une durée maximum de 15 minutes.

7. Procédé selon les revendications 5 et 6, caractérisé en ce que les eaux usées sont envoyées à raison d'au moins 80%, et la boue de recyclage (5) à activité biologique en une quantité de 60 - 400% de la quantité d'eaux usées, dans la zone anoxique (1a) du stade d'hydrolyse et d'acidification (1), et en ce que la fraction résiduelle est envoyée au stade de nitrification et de dénitrification (2).
